# EUROPEAN PATENT APPLICATION

(11) **EP 4 742 366 A1**
(43) Date of publication of application: **13.05.2026**
(21) Application number: 24836297.2
(22) Date of filing: 02.07.2024
(51) Int. Cl.: H01M 10/613, H01M 10/66, H01M 10/6556, H01M 10/653, H01M 50/502, H01M 10/6551, H01M 10/625, H01M 50/574, H01M 50/507

(54) **BATTERY DISCONNECT DEVICE**

(30) Priority: 05.07.2023 KR 20230086961
(71) Applicant: LS E-MOBILITY SOLUTIONS CO., LTD., Cheongju-si, Chungcheongbuk-do 28439 (KR)
(72) Inventor: KIM, Jaeseop, Cheongju-si, Chungcheongbuk-do 28439 (KR)
(74) Representative: K&L Gates LLP
(86) International application number: PCT/KR2024/009308
(87) International publication number: WO 2025/009849

(57) **Abstract**

Provided is a battery disconnect device. According to an aspect of the present invention, the battery disconnect device comprises: a housing including a housing body portion having a box shape and a pipe coupling portion provided on one surface of the housing body portion; a plurality of contactors disposed inside the housing body portion and electrically connected to an external power source and an external load; a busbar comprising a pipe contact portion for covering at least a portion of the pipe coupling portion, and a contactor connecting portion connected to the pipe contact portion and electrically connected to at least one of the plurality of contactors; a cooling pipe arranged so as to extend between the pipe coupling portion and the pipe contact portion and configured such that a cooling fluid can flow therein so as to receive heat generated in the busbar and discharge the heat to the outside; and a heat dissipator made of a material having a predetermined degree of elasticity or having a predetermined degree of fluidity such that, at least during installation, same can be deformed according to the shape of the space in which same is contained, and configured to surround the outer circumferential portion of the cooling pipe.

## Description

### Technical Field

The present disclosure relates to a battery disconnect device, and more particularly, to a battery disconnect device cooled using a cooling fluid.

### Background Art

The trend of restricting the use of fossil fuels to prevent climate change continues. This trend is affecting daily life as well as the field of power generation to produce electricity.

As a result, research is actively being conducted to drive a vehicle using electricity or hydrogen, such as an electric vehicle (EV), a hybrid electric vehicle (HEV), and a hydrogen vehicle (HV), away from conventional vehicles that generate power using fossil fuels such as gasoline or diesel.

The above-described EV, HEV, HV, and the like, essentially include a battery for supplying power to drive the vehicle. As an operation of a vehicle and a battery driving the vehicle continues, high heat is generated from the battery and a battery disconnect unit (BDU), which is densely packed with devices for switching the battery and loads, such as switches.

In this case, when the generated high heat is left as it is, there is a possibility that the battery, the BDU, or various elements provided in the vehicle can be damaged. Therefore, compared to vehicles with traditional structures, that is, vehicles driven by fossil fuels, the need for effective heat dissipation of batteries in the EV, HEV, HV, and the like increases.

A method widely used for cooling a battery can be divided into air cooling and water cooling. For conventional vehicles that use fossil fuels, sufficient cooling efficiency can be expected even with air cooling, as the amount of heat generated from the battery is not excessive. On the contrary, the EV, HEV, HV, and the like, including a battery that dissipates high heat generally are provided with water cooling as it is difficult to cool them with air cooling alone.

However, when cooling a battery with water cooling, a passage in which a heat transfer medium, that is, water, flows to receive heat of the battery must be physically completely separated from the battery. That is, the passage must allow water to flow thereinside, but communication with the outside must be blocked.

Therefore, in order to cool the battery using water cooling, additional members such as a rubber ring are required to prevent any leakage of water. This causes an increase in unit price of the product and a decrease in assemblability. Furthermore, an airtight empty space can occur between each component, resulting in a problem that cooling efficiency decreases as the heat transfer rate decreases.

Accordingly, there has been an urgent need for the development of a battery disconnect device that can efficiently cool heat generated from a busbar by improving a heat transfer rate between a heat-generating component and a heat-absorbing component.

### Disclosure of Invention

### Technical Problem

The present disclosure is contrived in consideration of the above-described circumstances, and an aspect of the present disclosure is to provide a battery disconnect device that can efficiently cool heat generated from a busbar.

Another aspect of the present disclosure is to provide a battery disconnect device having a structure that can prevent loss of a cooling fluid and be insulated from a battery voltage.

Yet still another aspect of the present disclosure is to provide a battery disconnect device having a structure applicable to various sizes of electrical devices.

The problems of the present disclosure are not limited to the above-mentioned problems, and other problems that are not mentioned herein will be clearly understood by those skilled in the art from the description below.

### Solution to Problem

According to one aspect of the present disclosure, there is provided a battery disconnect device including a housing including a housing body part in a box shape and a pipe coupling part provided on one surface of the housing body part; a plurality of contactors arranged inside the housing body part and electrically connected to an external power source and external loads, respectively; a busbar including a pipe contact part covering at least a portion of the pipe coupling part and a contact connection part connected to the pipe contact part and electrically connected to at least one of the plurality of contactors; a cooling pipe arranged to pass between the pipe coupling part and the pipe contact part, and through which a cooling fluid for receiving heat generated from the busbar and dissipating it to the outside can flow therein; and a heat dissipation body made of a material having a predetermined elasticity or a material having a predetermined fluidity that can be deformed to fit a shape of a space accommodated at least during installation so as to surround an outer periphery of the cooling pipe.

In this case, the heat dissipation body can be interposed between the pipe contact part and the pipe coupling part and configured to seal at least one region therebetween.

In this case, the pipe coupling part can include a coupling groove provided on the one surface of the housing body part to accommodate one side part of the cooling pipe.

In this case, the coupling groove can have a shape corresponding to an outer periphery of the cooling pipe.

In this case, the pipe contact part can include a contact groove that accommodates the other side part of the cooling pipe.

In this case, the contact groove can have a shape corresponding to an outer periphery of the cooling pipe.

In this case, the pipe contact part can include a pipe contact surface surrounding one side part of the cooling pipe.

In this case, the pipe contact surface can be bent in an outer direction of the housing body to correspond to a shape of an outer periphery of one side part of the cooling pipe.

In this case, the pipe coupling part can include a pipe coupling surface surrounding the other side part of the cooling pipe.

In this case, the pipe coupling surface can be bent toward the housing body to correspond to a shape of an outer periphery of the other side part of the cooling pipe.

In this case, the pipe contact part can have a plate shape that is convexly curved in an outer direction of the housing body part.

In this case, the pipe contact part can be arranged to extend parallel to the cooling pipe, and the contactor connection part can be connected to a side part of the pipe contact part in an extension direction.

In this case, the contactor connection part can have a flat shape parallel to the one surface of the housing body part.

In this case, the busbar can include an inner busbar including an inner pipe contact part coupled to the pipe coupling part and an inner contactor connection part connected to the inner pipe contact part; and an outer busbar including an outer pipe contact part covering at least a portion of the inner pipe contact part and an outer contactor connection part connected to the outer pipe contact part to be electrically connected to the inner contactor connection part, wherein the cooling pipe is arranged to pass between the inner pipe contact part and the outer pipe contact part.

In this case, the inner contactor connection part and the outer contactor connection part can be in contact with each other.

In this case, the inner busbar and the outer busbar can have a symmetrical shape with respect to the cooling pipe.

In this case, the cooling pipe can have a rectangular shape in a cross-section perpendicular to an extension direction.

In this case, the busbar can have a flat shape parallel to the one surface of the housing body part.

In this case, the rectangular shape can have a first width parallel to the one surface of the housing body part that is larger than a second width perpendicular to the first width.

In this case, the busbar can be provided in plurality, and the plurality of busbars can be arranged in a row along an extension direction of the cooling pipe.

In this case, the heat dissipation body can be made of a thermal conductive pad, a thermal conductive gel or a thermal conductive rubber.

In this case, the thermal conductive pad, thermal conductive gel or thermal conductive rubber can have a thermal conductivity above 1 W/mK.

In this case, the external power source can be a battery provided in an electric vehicle.

In this case, the heat dissipation body can include a material having an insulating property so as to secure predetermined insulating performance.

### Advantageous Effects of Invention

A battery disconnect device according to one aspect of the present disclosure can be configured such that a cooling pipe through which a cooling fluid having high heat transfer performance flows receives heat from a busbar to dissipate it to the outside, thereby efficiently cooling heat generated from the busbar.

A battery disconnect device according to one aspect of the present disclosure can be configured such that a cooling pipe is arranged to pass through between a pipe contact part of a busbar and a pipe coupling part of a housing, and a heat dissipation body surrounding the cooling pipe seals between the pipe contact part and the pipe coupling part so as to allow heat exchange from the busbar to the cooling pipe to be performed through thermal conduction by the heat dissipation body, thereby efficiently cooling heat generated from the busbar.

A battery disconnect device according to one aspect of the present disclosure can be configured such that a cooling fluid for cooling a busbar flows within a cooling pipe, and the cooling pipe can be configured such that it is fluidly connected to an outside of the battery disconnect device, thereby preventing the cooling fluid flowing through the cooling pipe from being lost to other elements of the battery disconnect device, and also being insulated from a battery voltage.

A battery disconnect device according to one aspect of the present disclosure can be configured such that a cooling pipe and a heat dissipation body for cooling a busbar are arranged compactly between the busbar and a housing, thereby increasing space utilization of the battery disconnect device and being applied to various sizes of electrical devices.

The effects of the present disclosure are not limited to the foregoing effects, and effects not mentioned herein will be clearly understood by those skilled in the art to which the present disclosure pertains from this specification and the accompanying drawings.

### Brief Description of Drawings

FIG. 1 is a perspective view of a battery disconnect device according to one embodiment of the present disclosure when viewed from above.
FIG. 2 is an exploded perspective view of a battery disconnect device according to one embodiment of the present disclosure when viewed from above.
FIG. 3 is a cross-sectional view taken along cutting line I-I in FIG. 1.
FIG. 4 is a perspective view of a battery disconnect device according to another embodiment of the present disclosure when viewed from above.
FIG. 5 is an exploded perspective view of a battery disconnect device according to another embodiment of the present disclosure when viewed from above.
FIG. 6 is a cross-sectional view taken along cutting line II-II in FIG. 4.
FIG. 7 is a perspective view of a battery disconnect device according to still another embodiment of the present disclosure when viewed from above.
FIG. 8 is an exploded perspective view of a battery disconnect device according to still another embodiment of the present disclosure when viewed from above.
FIG. 9 is a cross-sectional view taken along cutting line III-III in FIG. 7.

### Mode for the Invention

Words and terms used in this specification and claims are not interpreted as limited to their ordinary or dictionary meanings, and should be interpreted as meanings and concepts consistent with the technical concept of the present disclosure in accordance with the principle by which the inventor can define terms and concepts in order to explain his or her invention in the best way.

In this specification, the terms "include" or "have" should be understood that they are intended to describe the presence of a feature, a number, a step, an operation, an element, a component or a combination thereof disclosed in the specification, and the presence or additional possibility of one or more other features, numbers, steps, operations, elements, components or combinations thereof are not excluded in advance.

When an element is said to be "in front of," "behind," "above," or "below" another element, it includes not only being placed "in front of," "behind," "above," or "below" the other element in direct contact therewith, but also when there is still another element placed therebetween unless otherwise specified. In addition, when an element is "connected" to another element, it includes not only being directly connected to each other but also indirectly connected to each other unless otherwise specified.

In this specification, when one component seals between another component and still another component, it means that the one component fills therebetween so as to allow heat exchange between the other components to be performed mostly through thermal conduction of the one component. As an example, the one component can have a predetermined elasticity or a predetermined fluidity, thereby being deformed in shape to fill a space therebetween.

A battery disconnect device according to an embodiment of the present disclosure is disclosed. A battery disconnect device according to an embodiment of the present disclosure is a device for blocking, when an overcurrent flows through an electric circuit to which a battery and a load are connected, electrical connection in the electric circuit, thereby preventing damage to the battery and other components due to the overcurrent.

The battery disconnect device can be provided in any form capable of allowing or blocking electrical connection between a battery and a load. As an example, the battery disconnect device can be provided as a battery disconnect unit (BDU).

The battery disconnect device according to an embodiment of the present disclosure can be provided in any vehicle having a battery, such as an EV, HEV, plug-in hybrid electric vehicle (PHEV), or HV. Alternatively, the battery disconnect device can be provided in any power device having a battery, such as an energy storage system (ESS).

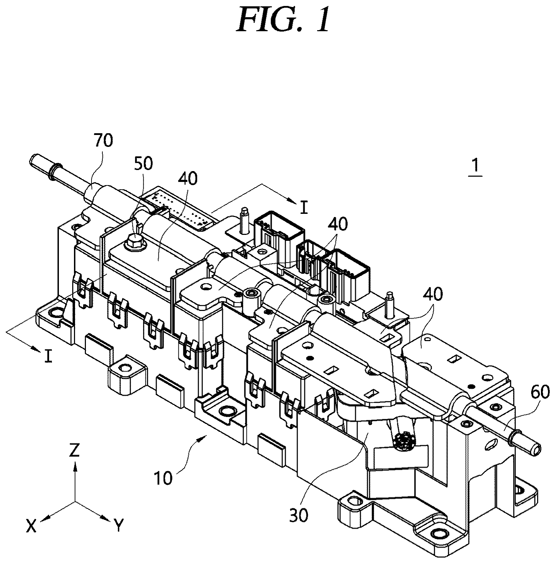

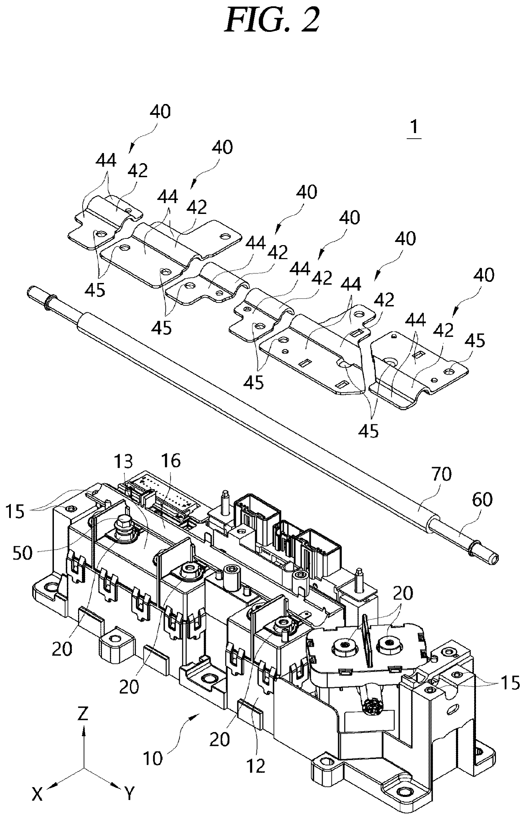

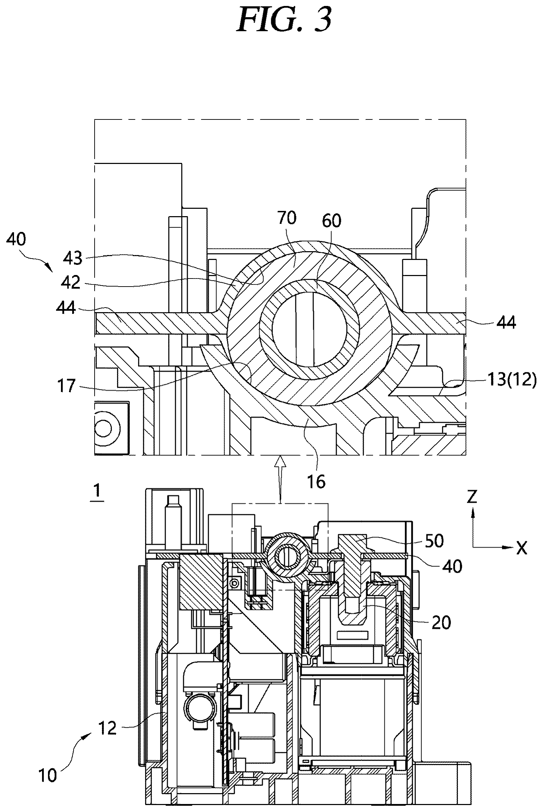

Hereinafter, a battery disconnect device according to one embodiment of the present disclosure will be described. FIG. 1 is a perspective view of a battery disconnect device according to one embodiment of the present disclosure when viewed from above. FIG. 2 is an exploded perspective view of a battery disconnect device according to one embodiment of the present disclosure when viewed from above. FIG. 3 is a cross-sectional view taken along cutting line I-I in FIG. 1.

Referring to FIGS. 1 to 3, a battery disconnect device 1 according to one embodiment of the present disclosure is disclosed. The battery disconnect device 1 according to this embodiment can include a housing 10, a contactor 20, a fuse 30, a busbar 40, a cooling pipe 60, and a heat dissipation body 70.

In this embodiment, the housing 10 is configured to provide a base on which other components of the battery disconnect device 1 are accommodated or installed. The housing 10 can include a housing body part 12 and a pipe coupling part 16.

The housing body part 12 can be provided as a structure in a box shape having a predetermined space thereinside. Furthermore, the housing body part 12 can be made of a material such as plastic having a predetermined rigidity. In this case, the housing body part 12 can include a material having a predetermined insulating property to secure insulation performance for the inside and outside.

Furthermore, in this embodiment, the housing body part 12 can include a housing side coupling member hole 15. The housing side coupling member hole 15 is a hole for allowing the coupling member 50 to be described later to be passed therethrough and coupled thereto.

The housing side coupling member hole 15 can be provided in plurality corresponding to a number of the coupling members 50. Of course, in some cases, the device 1 cannot separately include the coupling member 50, and in such cases, the housing side coupling member hole 15 cannot be separately provided. This will be described later together with the coupling member 50.

Meanwhile, in this embodiment, the housing body part 12 is provided in a box shape, but is not limited thereto, and the shape of the housing body part 12 can be appropriately deformed as needed. For example, the housing body part 12 can be configured to have a portion open or curved to correspond to a form of a space in which the battery disconnect device 1 is placed or a shape and arrangement of other elements of the battery disconnect device 1.

Referring to FIGS. 2 and 3, the pipe coupling part 16 can be provided on one surface of the housing body part 12. In the shown embodiment, the pipe coupling part 16 is provided on an upper surface 13 facing a positive direction of the Z-axis of the housing body part 12. However, a surface on which the pipe coupling part 16 is provided is not particularly limited.

In this embodiment, the pipe coupling part 16 is a portion where the cooling pipe 60 to be described later and the heat dissipation body 70 surrounding the same are coupled to each other. The pipe coupling part 16 can include a pipe coupling surface 17. The pipe coupling surface 17 can refer to a surface where the cooling pipe 60 and the heat dissipation body 70 surrounding the same are coupled to each other while being in contact with each other.

The pipe coupling part 16 can be provided in a form of a groove (hereinafter, referred to as a pipe coupling groove) in which at least a portion of the cooling pipe 60 is accommodated as shown. Alternatively, the pipe coupling surface 17 can be provided in a concavely recessed form into the housing body part 12. In other words, in this embodiment, the pipe coupling surface 17 can be defined as an inner surface of the pipe coupling groove.

Furthermore, the pipe coupling groove can be provided along an extension direction of the cooling pipe 60. As will be described in more detail later, in this embodiment, the cooling pipe 60 can extend in a Y-axis direction parallel to an arrangement direction of the plurality of busbars 40 coupled to the upper surface 13 of the housing body part 12. Accordingly, the cooling pipe 60 can be stably coupled to the pipe coupling part 16.

Meanwhile, in this embodiment, the pipe coupling groove can have a shape corresponding to a shape of an outer periphery of the cooling pipe 60. Alternatively, the pipe coupling surface 17 can correspond to the shape of the outer periphery of the cooling pipe 60.

Accordingly, the cooling pipe 60 can be more stably coupled to the pipe coupling groove, and the pipe coupling surface 17 can be in contact with the heat dissipation body 70 surrounding the cooling pipe 60 over a wider area and stably support them.

In this case, a depth of the pipe coupling groove can be provided to be slightly smaller than a diameter of the heat dissipation body 70 surrounding the cooling pipe 60. As an example, the depth of the pipe coupling groove can be provided as half or less than the diameter of the heat dissipation body 70.

Accordingly, only a portion of the cooling pipe 60 and the heat dissipation body 70 surrounding the same can be received in the pipe coupling groove, and the other part thereof can be placed outside the pipe coupling groove so as to be in contact with a pipe contact part 42 to be described later. Of course, in this embodiment, the depth of the pipe coupling groove is not particularly limited.

Meanwhile, in this embodiment, the pipe coupling part 16 is provided in a form of a groove provided on the upper surface 13 of the housing body part 12, but the pipe coupling part 16 can be configured in various forms to which the cooling pipe 60 and the heat dissipation body 70 surrounding the same can be coupled. For example, the pipe coupling part 16 can be provided in a form of a ring to which a portion of the cooling pipe 60 is insertedly coupled.

Referring again to FIGS. 2 and 3, the housing body part 12 of the battery disconnect device 1 according to one embodiment of the present disclosure can include a plurality of contactors 20 and a fuse 30.

In this embodiment, the plurality of contactors 20 can be coupled and electrically connected to the busbars 40 to be described later in a predetermined manner, so as to electrically connect an external battery, the fuse 30 and other components provided in the vehicle thereto. To this end, the contactors 20 can be made of a conductive material.

In this case, the contactor 20 can be provided in a form in which a hole can be arranged on one surface as shown to be coupled to another component, but a shape of the contactor 20 is not particularly limited as long as it can be configured to be electrically connected to another element.

Meanwhile, in this embodiment, the plurality of contactors 20 can be arranged in a predetermined manner in the housing body part 12. For example, the plurality of contactors 20 can be arranged in a row inside the housing body part 12. The manner or position in which the plurality of contactors 20 are placed can be modified as needed.

Referring to FIGS. 1 and 2, in this embodiment, the fuse 30 can be placed inside the housing body part 12. In this embodiment, the fuse 30 is configured to prevent, when an overcurrent flows through the busbar 40, damage or accidents caused thereby. That is, the fuse 30 can be an element for performing a main function of the battery disconnect device 1.

In this embodiment, the fuse 30 can be electrically connected to the busbar 40 to be described later through the contactor 20 in a predetermined manner. To this end, some of the plurality of contactors 20 can be coupled to the fuse 30. Furthermore, the contactor 20 coupled to the fuse 30 can be electrically connected to the busbar 40. Accordingly, the fuse 30 can detect whether an overcurrent flows through the busbar 40.

Furthermore, the fuse 30 can be configured with a device that breaks when an overcurrent is applied thereto. Accordingly, when an overcurrent flows through the busbar 40, the fuse 30 blocks electrical connection, thereby blocking electrical connection between a battery (not shown) and other elements of the vehicle. In this case, a process in which the fuse 30 blocks electrical connection is a well-known technology, and thus a detailed description thereof will be omitted.

Referring again to FIGS. 1 to 3, the busbar 40 can be coupled to the housing 10 of the battery disconnect device 1 according to one embodiment of the present disclosure. In this embodiment, the busbar 40 is configured to allow the aforementioned plurality of contactors 20 to be electrically connected thereto in a predetermined manner. To this end, the busbar 40 can be made of a conductive material.

In this case, heat can be generated in the busbar 40 as a current flows. Excessive heat generated from the busbar 40 can cause fire, shorten the life of components due to deterioration, or reduce an electrical connection function of the battery disconnect device 1 or a current blocking function due to an overcurrent. In order to prevent this, the busbar 40 can be configured to be cooled by the cooling pipe 60 to be described later.

To this end, in this embodiment, the busbar 40 can include a pipe contact part 42. The pipe contact part 42 is a portion that exchanges heat by coming into contact with the cooling pipe 60 to be described later and the heat dissipation body 70 surrounding the same.

In this embodiment, the pipe contact part 42 can be provided as a member that covers at least a portion of the pipe coupling part 16 on the upper surface 13 of the housing body part 12. Furthermore, a pipe contact surface 43 can be provided on one side part of the pipe contact part 42.

In this case, the pipe contact surface 43 can be defined as a surface that exchanges heat while being in contact with an outer periphery of the heat dissipation body 70 surrounding the cooling pipe 60. To this end, the pipe contact surface 43 can face the cooling pipe 60.

Accordingly, a predetermined space (hereinafter, referred to as a heat exchange region) surrounded by the pipe contact surface 43 and the pipe coupling surface 17 can be provided between the pipe contact part 42 and the pipe coupling part 16. In the space, heat generated from the busbar 40 can be transferred to the cooling pipe 60.

In this embodiment, the pipe contact part 42 can be provided as a plate-shaped member arranged to be curved in an upward direction. Accordingly, a groove (hereinafter, pipe contact groove) that is concavely recessed upward can be provided on a lower surface of the pipe contact part 42. Furthermore, the pipe contact groove can be provided along an extension direction of the cooling pipe 60.

The pipe contact groove can accommodate at least a portion of the cooling pipe 60 and the heat dissipation body 70 surrounding the same. In this case, the pipe contact surface 43 can be provided into the pipe contact groove.

Accordingly, the pipe contact part 42 can exchange heat while protecting the cooling pipe 60 accommodated thereinside and the heat dissipation body 70 surrounding the same from external contamination or impact. Furthermore, the pipe contact part 42 can perform a function of preventing the heat dissipation body 70 from escaping out of the foregoing heat exchange region while at the same time maintaining and fixing an overall shape of the heat dissipation body 70.

Meanwhile, in this embodiment, the pipe contact part 42 is provided as a plate-shaped member extending in a Y-axis direction but curved in a positive direction of the Z-axis, but a shape of the pipe contact part 42 is not particularly limited as long as it can cover at least a portion of the pipe coupling part 16 and form a predetermined heat exchange region therebetween.

Referring again to FIGS. 2 and 3, the busbar 40 of the battery disconnect device 1 according to one embodiment of the present disclosure can include a contactor connection part 44. The contactor connection part 44 is configured to be electrically connected to the aforementioned contactor 20 to allow electrical connection of the busbar 40.

In this embodiment, the contactor connection part 44 can be provided integrally by being connected to a side part of the pipe contact part 42. In this case, the contactor connection part 44 and the pipe contact part 42 should be interpreted as referring to any portion of the busbar 40 provided in singularity. However, the contactor connection part 44 and the pipe contact part 42 can be provided as separate members and then coupled to each other in a predetermined manner to constitute one busbar 40.

According to this embodiment, the contactor connection part 44 can be provided as a flat-shaped member parallel to the upper surface 13 of the housing body part 12. Accordingly, the contactor connection part 44 can be stably coupled to the housing body part 12 to allow electrical connection between the contactor 20 and the busbar 40. Of course, a shape of the contactor connection part 44 is not particularly limited as long as it can electrically connect the contactor 20 and the pipe contact part 42.

In this case, the contactor connection part 44 can include a busbar side coupling member hole 45 to which the coupling member 50 to be described later is passed therethrough and coupled. The busbar side coupling member hole 45 can be provided in plurality corresponding to a number of the coupling members 50.

Of course, in some cases, the device 1 cannot separately include the coupling member 50, and in such cases, the busbar side coupling member hole 45 cannot be separately provided. This will be described later together with the coupling member 50.

Meanwhile, referring again to FIGS. 1 and 2, in this embodiment, at least one of the busbars 40 can be provided. In this embodiment, six busbars 40 are provided. In this case, the plurality of busbars 40 can be arranged in a predetermined manner on the upper surface 13 of the housing body part 12.

As shown, the plurality of busbars 40 can be arranged in a row along the Y-axis on the upper surface of the housing body part 12. An arrangement method of the busbars 40 can be appropriately modified as needed.

Furthermore, when a plurality of busbars 40 are spaced apart from one another as shown in FIGS. 1 and 2, a heat exchange region can consist of a plurality of regions spaced apart from one another to correspond to an arrangement relationship thereof.

In this case, in this embodiment, the plurality of busbars 40 can have different shapes. This suggests that each busbar 40 can be appropriately modified in consideration of a form of a portion of the housing 10 to which the busbar 40 is coupled, a position of the contactor 20 electrically connected to the busbar 40, and the like.

Referring to FIGS. 1 to 3, a cooling pipe 60 can be arranged between the pipe contact part 42 of the busbar 40 and the pipe coupling part 16 of the housing 10 to pass therethrough. In other words, the cooling pipe 60 can be arranged to pass through the heat exchange region.

The cooling pipe 60 can be provided in a form of a pipe through which a predetermined cooling fluid can flow. In this case, the cooling fluid is a fluid that receives heat generated from the busbar 40 to dissipate it to the outside. As an example, the cooling fluid can be water, but is not limited thereto.

In this embodiment, the cooling pipe 60 can be made of a material having a predetermined water resistance and heat transfer performance. This is to prevent the cooling pipe 60 from being corroded by a cooling fluid in an embodiment in which the cooling fluid is made of water. As an example, the cooling pipe 60 can be made of aluminum or an alloy material including the same, but is not limited thereto.

In this way, the battery disconnect device 1 according to this embodiment is configured such that the cooling fluid is isolated from the outside to flow only inside the cooling pipe 60. Therefore, the busbar 40 can be cooled through efficient heat transfer performance of the cooling fluid without risk of leakage of the cooling fluid.

In this case, according to this embodiment, the cooling pipe 60 can extend in one direction. In this case, the cooling pipe 60 can extend in a direction parallel to a direction in which the plurality of busbars 40 are arranged. In the shown embodiment, the cooling pipe 60 extends in a Y-axis direction, which is a direction in which the six busbars 40 are arranged.

Accordingly, at least a portion of the cooling pipe 60 can be in contact with all the pipe contact parts 42 of the plurality of busbars 40 so as to absorb heat generated from the busbars 40 as effectively as possible.

Of course, a portion of the cooling pipe 60 can be bent depending on an arrangement method of the busbars 40. Moreover, the cooling pipe 60 can be configured to be bent in a zigzag shape so as to exchange heat with each of the busbars 40 over as much area as possible. In this case, the pipe contact part 42 of the busbar 40 can also be provided in a zigzag shape to correspond to an extension direction of the cooling pipe 60.

Meanwhile, openings that can communicate with the outside can be provided at both ends of the cooling pipe 60 in an extension direction. In this case, each end of the cooling pipe 60 can extend to an outer side of the housing body part 12, and thus the opening can be positioned outside the housing 10.

An inside of the cooling pipe 60 can be communicated with an outside of the battery disconnect device 1 through each of the ends. That is, the cooling fluid can be introduced into the cooling pipe 60 through either one of the ends, and discharged from the cooling pipe 60 through the other end. Through this, the flow of the cooling fluid can be controlled to absorb the heat of the busbar 40 and dissipate it to the outside.

Referring to FIGS. 1 to 3, in one embodiment of the present disclosure, the heat dissipation body 70 can be provided on an outer periphery of the cooling pipe 60. The heat dissipation body 70 is configured to allow efficient heat exchange between the cooling pipe 60 and the busbar 40 through thermal conduction.

In this case, the heat dissipation body 70 can be configured to entirely surround the outer periphery of the cooling pipe 60 for one section. Here, the one section can be defined as a section between a point where the cooling pipe 60 and the busbar 40 first meet and a point where the cooling pipe 60 and the busbar 40 no longer meet, when viewed in an extension direction of the cooling pipe 60.

In this case, the heat dissipation body 70 of the battery disconnect device 1 according to this embodiment can be configured to seal between the pipe contact part 42 of the busbar 40 and the pipe coupling part 16 of the housing 10 for efficient heat exchange between the busbar 40 and the cooling pipe 60. In other words, the heat dissipation body 70 can be configured to seal a heat exchange region.

This is because, when an air layer having a low thermal conductivity is interposed between the cooling pipe 60 and the busbar 40, a heat exchange efficiency between the busbar 40 and the cooling pipe 60 can be reduced due to the air layer.

To this end, the heat dissipation body 70 can be made of a material having a predetermined elasticity so as to seal between the pipe contact part 42 and the pipe coupling part 16. For example, the heat dissipation body 70 can include at least one of a thermal conductive rubber, a thermal conductive pad, and a thermal conductive gel, but is not limited thereto.

The heat dissipation body 70 having an elasticity can be elastically deformed to fill an empty space between the pipe contact part 42 of the busbar 40 and the pipe coupling part 16 of the housing 10 when the busbar 40 is brought closer to the housing 10 as they are coupled to each other during a manufacturing process of the battery disconnect device 1.

Alternatively, the heat dissipation body 70 can be made of a material having a predetermined fluidity that can be deformed and flowed to fit a shape of a space accommodated at least during installation so as to seal between the pipe contact part 42 and the pipe coupling part 16. For example, the heat dissipation body 70 can include at least one of a thermal conductive gel, a thermal conductive pad, and a thermal conductive rubber, but is not limited thereto.

The heat dissipation body 70 having a fluidity can flow into and fill an empty space between the pipe contact part 42 of the busbar 40 and the pipe coupling part 16 of the housing 10 when the busbar 40 is brought closer to the housing 10 as they are coupled to each other during the manufacturing process of the battery disconnect device 1.

Meanwhile, the heat dissipation body 70 can be made of a material having a predetermined thermal conductivity. As an example, the heat dissipation body 70 can be made of a material having a thermal conductivity above 1 W/mK. However, the thermal conductivity of a material constituting the heat dissipation body 70 is not particularly limited, and in any case, it is sufficient if the thermal conductivity can be improved compared to conventional rubber, gel, or pad.

Meanwhile, referring again to FIGS. 1 to 3, the battery disconnect device 1 according to one embodiment of the present disclosure can further include the coupling member 50. The coupling member 50 is configured to couple the busbar 40 to the housing 10 or electrically connect the busbar 40 and the contactor 20.

According to one embodiment of the present disclosure, the coupling member 50 is provided as a screw-shaped member and can be provided in plurality. Some of the plurality of coupling members 50 can be passed through and coupled to the aforementioned busbar side coupling member hole 45 and housing side coupling member hole 15 to couple them to one another.

Furthermore, some of the other plurality of coupling members 50 can be coupled to the busbar side coupling member hole 45 of the busbar 40 and the contactor 20 to electrically connect them. To this end, the coupling member 50 can be made of a metal or the like having a predetermined conductivity.

Meanwhile, in this embodiment, the coupling member 50 is provided as a screw or bolt-shaped member, but the coupling member 50 can be made in various components that can connect the busbar 40 and the housing 10 or the contactor 20 to each other. Moreover, when the busbar 40 and the housing 10 or the contactor 20 can be coupled by themselves through shape fitting, or the like, the coupling member 50 cannot also be provided.

As described above, the battery disconnect device 1 according to one embodiment of the present disclosure can be configured such that a cooling pipe 60 through which a cooling fluid having high cooling performance flows is arranged between the pipe contact part 42 of the busbar 40 and the pipe coupling part 16 of the housing 10 to pass therethrough so as to exchange heat, thereby cooling heat generated from the busbar 40 with high efficiency.

In addition, the battery disconnect device 1 according to one embodiment of the present disclosure can be configured such that the heat dissipation body 70 surrounding the cooling pipe 60 seals between the pipe contact part 42 of the busbar 40 and the pipe coupling part 16 of the housing 10, so as to allow the cooling pipe 60 and the busbar 40 to efficiently exchange heat through thermal conduction, thereby effectively dissipating heat generated from the busbar 40.

In addition, the battery disconnect device 1 according to one embodiment of the present disclosure can be configured such that a cooling fluid flows only within the cooling pipe 60 and the cooling pipe 60 is connected to an outside of the battery disconnect device 1, thereby preventing a risk due to loss of the cooling fluid, and the like.

In addition, the battery disconnect device 1 according to one embodiment of the present disclosure can be configured such that the cooling pipe 60 and the heat dissipation body 70 for cooling the busbar 40 are arranged compactly between the busbar 40 and the housing 10, thereby increasing space utilization and being applied to various sizes of electrical devices.

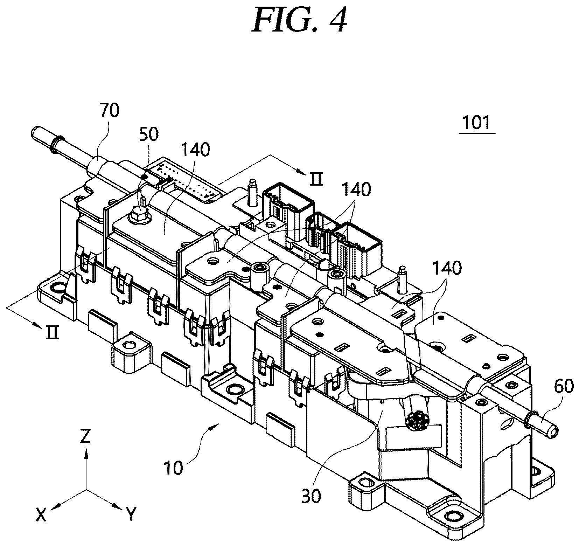

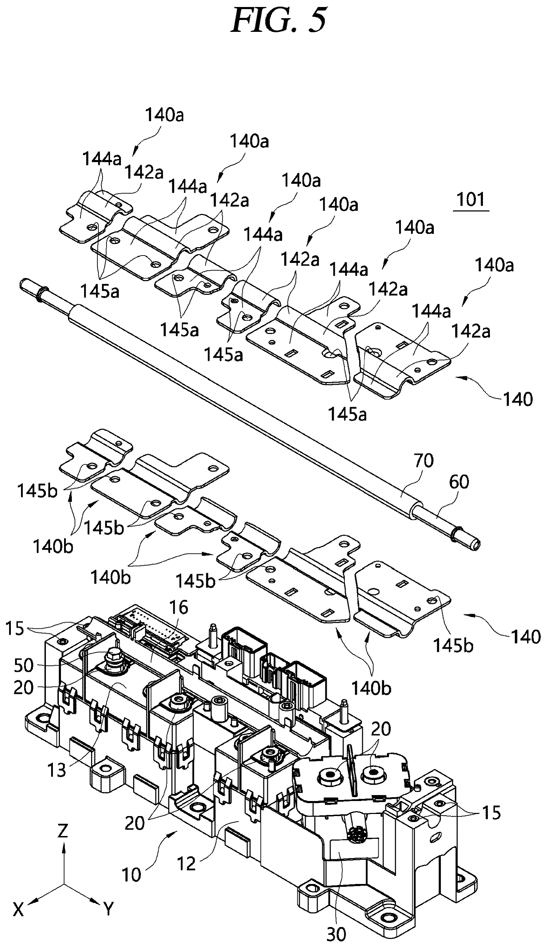

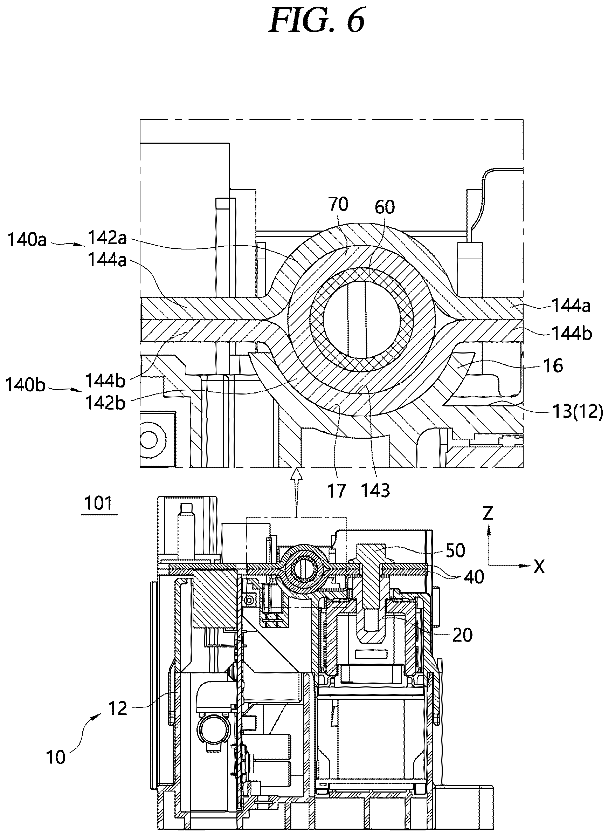

Hereinafter, a battery disconnect device according to another embodiment of the present disclosure will be described with different drawings. FIG. 4 is a perspective view of a battery disconnect device according to another embodiment of the present disclosure when viewed from above. FIG. 5 is an exploded perspective view of a battery disconnect device according to another embodiment of the present disclosure when viewed from above. FIG. 6 is a cross-sectional view taken along cutting line II-II in FIG. 4.

Referring to FIGS. 4 to 6, a battery disconnect device 101 according to another embodiment of the present disclosure is disclosed. The battery disconnect device 101 according to this embodiment can include a housing 10, a contactor 20, a fuse 30, a busbar 140, a coupling member 50, a cooling pipe 60, and a heat dissipation body 70.

In this case, the housing 10, the contactor 20, the fuse 30, the coupling member 50, the cooling pipe 60 and the heat dissipation body 70 of the battery disconnect device 101 according to another embodiment of the present disclosure can be configured in the same manner as the housing, contactor, the fuse, the coupling member, the cooling pipe and the heat dissipation body of the battery disconnect device according to one embodiment of the present disclosure described above with reference to FIGS. 1 to 3, and thus a detailed description thereof will be omitted.

The busbar 140 of the battery disconnect device 101 according to this embodiment can include an outer busbar 140a and an inner busbar 140b. The outer busbar 140a and the inner busbar 140b can be configured to be electrically connected to each other to allow electrical connection of the plurality of contactors 20 in a predetermined manner.

The inner busbar 140b of the battery disconnect device 1 according to this embodiment can include an inner pipe contact part 142b. The inner pipe contact part 142b is configured to exchange heat while being in contact with an outer periphery of the heat dissipation body 70 surrounding the cooling pipe 60.

To this end, the inner pipe contact part 142b can be provided as a member configured to surround a lower side part of the cooling pipe 60 and the heat dissipation body 70 surrounding the same. Furthermore, an inner pipe contact surface 143b can be provided on the one side of the inner pipe contact part 142b. The inner pipe contact surface 143b can be defined as a surface that supports the cooling pipe 60 and the heat dissipation body 70 while being in contact therewith to exchange heat.

In this case, the inner pipe contact part 142b can be provided as a plate-shaped member curved in an outer direction of the cooling pipe 60 so as to accommodate at least a portion of the cooling pipe 60 and the heat dissipation body 70 surrounding the same. In this case, the inner pipe contact surface 143b can be defined as a concavely recessed portion on one surface of the inner pipe contact part 142b.

Furthermore, the inner pipe contact part 142b can extend along an extension direction of the cooling pipe 60. Accordingly, the inner pipe contact part 142b can stably support a lower side part of the cooling pipe 60 and the heat dissipation body 70 to exchange heat.

In this case, the inner pipe contact part 142b and the inner pipe contact surface 143b can have a shape corresponding to an outer periphery of the cooling pipe 60. Through this, the inner pipe contact part 142b can more efficiently exchange heat with the cooling pipe 60.

The inner busbar 140b according to this embodiment can be configured to be coupled to the pipe coupling part 16 of the housing 10. As shown, when the pipe coupling part 16 is provided in a form of a recessed groove, a bent portion of the inner pipe contact part 142b can be inserted and accommodated into the groove.

Meanwhile, in this embodiment, the inner pipe contact part 142b is provided as a curved plate-shaped member, but a shape of the inner pipe contact part 142b is not particularly limited as long as it can support the cooling pipe 60 and one side part of the heat dissipation body 70 surrounding the same while being coupled to the pipe coupling part 16.

Referring to FIGS. 5 and 6, the inner busbar 140b of the battery disconnect device 101 according to another embodiment of the present disclosure can include an inner contactor connection part 144b. In this case, the inner contactor connection part 144b can be provided integrally by being connected to a side part of the inner pipe contact part 142b.

In this case, the inner contactor connection part 144b and the inner pipe contact part 142b should be interpreted as referring to any portion of the inner busbar 140b provided in singularity. However, the inner contactor connection part 144b and the inner pipe contact part 142b can be provided as separate members and then coupled to each other in a predetermined manner to constitute one inner busbar 140b.

According to this embodiment, the inner contactor connection part 144b can be provided as a flat-shaped member parallel to the upper surface 13 of the housing body part 12. Accordingly, the inner contactor connection part 144b can be stably coupled to the housing body part 12 to allow electrical connection between the contactor 20 and the inner busbar 140b. Of course, a shape of the inner contactor connection part 144b is not particularly limited as long as it can electrically connect the contactor 20 and the inner pipe contact part 42b.

In this case, the inner contactor connection part 144b can include an inner busbar side coupling member hole 145b to which the coupling member 50 is passed therethrough and coupled. The inner busbar side coupling member hole 145b can be provided in plurality corresponding to a number of the coupling members 50.

Of course, in some cases, the device 1 cannot separately include the coupling member 50, and in such cases, the inner busbar side coupling member hole 145b cannot be separately provided.

Referring again to FIGS. 4 to 6, the outer busbar 140a can be coupled to an upper side of the inner busbar 140b of the battery disconnect device 101 according to this embodiment. In this embodiment, the outer busbar 140a can include an outer pipe contact part 142a. The outer pipe contact part 142a can be provided as a member covering an inner busbar contact part 142b coupled to the pipe coupling part 16 of the housing 10.

Furthermore, the outer pipe contact surface 143a can be provided on one side of the outer pipe contact part 142a. The outer pipe contact surface 143a can be defined as a surface that exchanges heat while being in contact with the heat dissipation body 70 surrounding the cooling pipe 60.

In this case, in this embodiment, the outer pipe contact part 142a can be provided as a plate-shaped member bent upward to surround the cooling pipe 60 and an upper side part of the heat dissipation body 70 surrounding the same. In this case, the outer pipe contact surface 143a can be defined as a concavely recessed portion on a lower surface of the outer pipe contact part 142a.

Accordingly, a predetermined space (hereinafter, referred to as a heat exchange region) surrounded by the outer pipe contact surface 143a and the inner pipe contact surface 143b can be provided between the inner busbar contact part 142b and the outer busbar contact part 142a.

Furthermore, the cooling pipe 60 and the heat dissipation body 70 surrounding the same can be arranged to pass through the heat exchange region. Accordingly, heat generated from the busbar 140 can be transferred to the cooling pipe 60 through the inner busbar contact part 142b and the outer busbar contact part 142a.

In addition, the outer pipe contact part 142a can protect the cooling pipe 60 accommodated thereinside and the heat dissipation body 70 surrounding the same from the outside. Furthermore, the outer pipe contact part 142a can perform a function of preventing the heat dissipation body 70 from escaping out of the foregoing heat exchange region while at the same time maintaining and fixing an overall shape of the heat dissipation body 70.

In this case, the outer pipe contact part 142a can have a shape corresponding to an outer periphery of the cooling pipe 60. Alternatively, the outer pipe contact surface 143a can be arranged as a curved surface corresponding to an outer periphery of the cooling pipe 60. Accordingly, a heat exchange region between the outer pipe contact part 142a and the inner pipe contact part 142b can have a shape corresponding to the cooling pipe 60.

Through this, the outer pipe contact part 142a can more efficiently exchange heat while being in contact with the cooling pipe 60 and the heat dissipation body 70. However, a shape of the outer pipe contact part 142a and the outer pipe contact surface 143a is not particularly limited as long as it can surround the cooling pipe 60 and the other side part of the heat dissipation body 70 surrounding the same.

Referring to FIGS. 5 and 6, the outer busbar 140a of the battery disconnect device 101 according to another embodiment of the present disclosure can include an outer contactor connection part 144a. In this case, the outer contactor connection part 144a can be provided integrally by being connected to a side part of the outer pipe contact part 142a.

In this case, the outer contactor connection part 144a and the outer pipe contact part 142a should be interpreted as referring to any part of the outer busbar 140a provided in singularity. However, the outer contactor connection part 144a and the outer pipe contact part 142a can also be provided as separate members and then coupled to each other in a predetermined manner to constitute one outer busbar 14a.

According to this embodiment, the outer contactor connection part 144a can be provided as a flat-shaped member parallel to the inner contactor connection part 144b. Furthermore, the outer contactor connection part 144a can be configured to be in surface contact with the inner contactor connection part 144b while being in contact therewith.

Accordingly, the outer contactor connection part 144a can be stably supported on the housing body part 12 while being electrically connected to the inner busbar 140a. Of course, a shape of the outer contactor connection part 144a is not particularly limited as long as it can be electrically connected to the inner contact connection part 142a or the contactor 20 to which the inner contact connection part 142a is connected.

In this case, the outer contactor connection part 144a can include an outer busbar side coupling member hole 145a to which the coupling member 50 is passed therethrough and connected. The outer busbar side coupling member hole 145a can be provided in plurality corresponding to a number of coupling members 50.

Of course, in some cases, the device 1 cannot separately include the coupling member 50, and in such cases, the outer busbar side coupling member hole 145a cannot be separately provided.

Meanwhile, as shown in FIGS. 5 and 6, the inner busbar 140b and the outer busbar 140a can have symmetrical shapes with respect to the cooling pipe 60. Through this, it can be possible to reduce component costs and simplify manufacturing process. However, the outer busbar 140a and the inner busbar 140b can have different shapes as needed.

The cooling pipe 60 of the battery disconnect device 101 according to another embodiment of the present disclosure can be arranged to pass through a heat exchange region between the outer pipe contact part 142a of the outer busbar 140a and the inner pipe contact part 142b of the inner busbar 140b as described above.

Furthermore, the heat dissipation body 70 can surround an outer periphery of the cooling pipe 60. In this case, the heat dissipation body 70 can be configured to seal the heat exchange region between the outer pipe contact part 142a and the inner pipe contact part 142b.

The cooling pipe 60 and the heat dissipation body 70 can be respectively configured to be the same as those of the battery disconnect device according to one embodiment of the present disclosure described with reference to FIGS. 1 to 3.

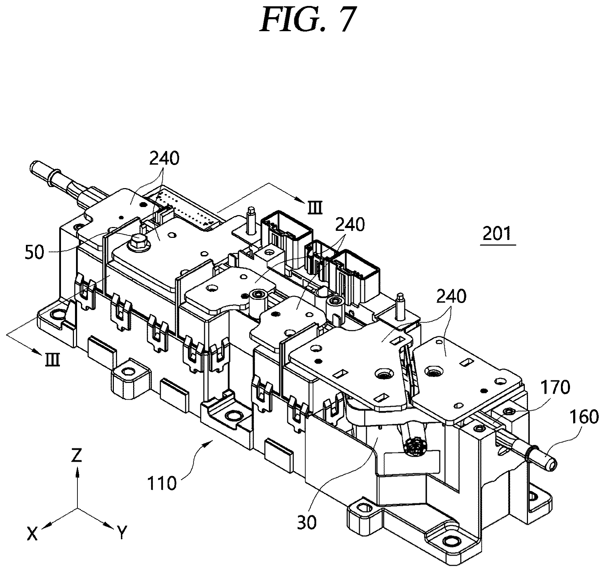

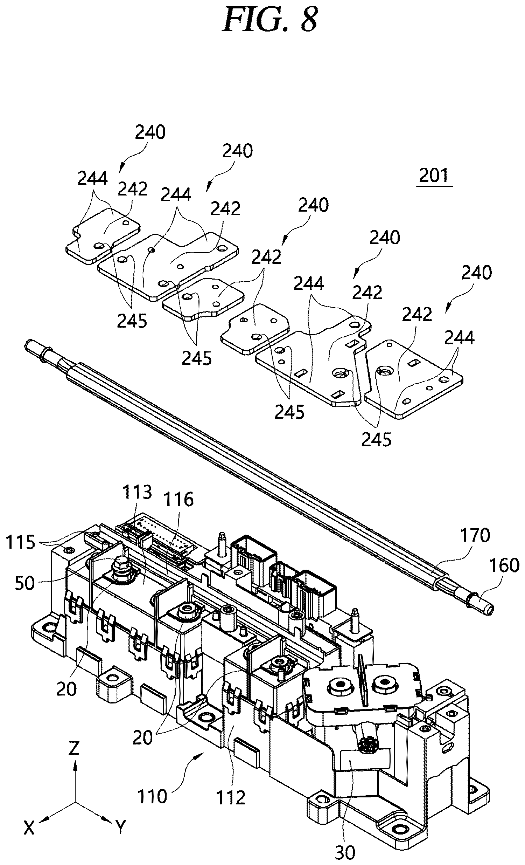

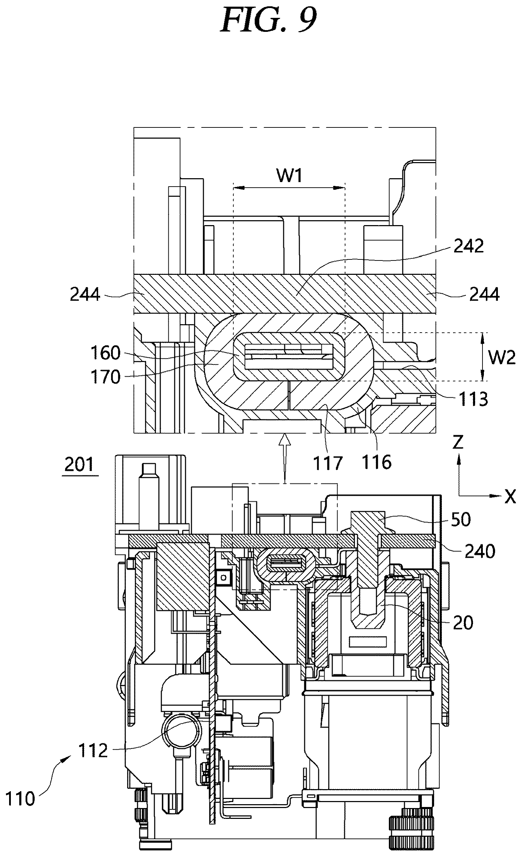

Hereinafter, a battery disconnect device according to still another embodiment of the present disclosure will be described with different drawings. FIG. 7 is a perspective view of a battery disconnect device according to still another embodiment of the present disclosure when viewed from above. FIG. 8 is an exploded perspective view of a battery disconnect device according to still another embodiment of the present disclosure when viewed from above. FIG. 9 is a cross-sectional view taken along cutting line III-III in FIG. 7.

Referring to FIGS. 7 to 9, a battery disconnect device 201 according to still another embodiment of the present disclosure is disclosed. The battery disconnect device 201 according to this embodiment can include a housing 110, a contactor 20, a fuse 30, a busbar 240, a coupling member 50, a cooling pipe 160, and a heat dissipation body 170. Furthermore, the housing 110 can include the housing body part 12 and a pipe coupling part 116.

In this case, the housing body part 12, the contactor 20, the fuse 30 and the coupling member 50 of the battery disconnect device 201 according to still another embodiment of the present disclosure can be configured to be the same as the housing body, the contactor, the fuse and the coupling member of the battery disconnect device according to one embodiment of the present disclosure described with reference to FIGS. 1 to 3, and therefore, a detailed description thereof will be omitted.

Referring to FIGS. 8 and 9, the pipe coupling part 116 can be provided on the upper surface 13 of the housing body part 12 of the battery disconnect device 201 according to this embodiment. The pipe coupling part 116 is a portion where the cooling pipe 160 to be described later and the heat dissipation body 170 surrounding the same are coupled to each other.

The pipe coupling part 116 can include a pipe coupling surface 117. The pipe coupling surface 117 can be defined as a surface being in contact with an outer periphery of the heat dissipation body 170 surrounding the cooling pipe 160 while supporting the same.

According to this embodiment, the pipe coupling part 116 can be provided in a form of a concavely recessed groove (hereinafter, referred to as a pipe coupling groove) on the upper surface 13 of the housing body part 12. Furthermore, the pipe coupling groove can be provided along a Y-axis direction, which is an extension direction of the cooling pipe 160. In this case, the pipe coupling surface 117 can be provided into the pipe coupling groove. Accordingly, the pipe coupling groove can accommodate and support the cooling pipe 160 and the heat dissipation body 170 surrounding the same.

In this case, in this embodiment, the pipe coupling groove or pipe coupling surface 117 can have a shape corresponding to the cooling pipe 160 or an outer periphery of the heat dissipation body 170 surrounding the same. Accordingly, the pipe coupling part 116 can stably support the cooling pipe 160 and the heat dissipation body 170.

Furthermore, in this embodiment, the pipe coupling groove can have a sufficient depth so as to entirely accommodate the cooling pipe 160 and the heat dissipation body 170. In this case, a predetermined space (hereinafter, referred to as a heat exchange region) in which the cooling pipe 160 and the heat dissipation body 170 are placed can be arranged into the pipe coupling groove.

As an example, a depth of the pipe coupling groove in a Z-axis direction can be the same as a diameter of the heat dissipation body 170 surrounding the cooling pipe 160 in a Z-axis direction. Accordingly, the cooling pipe 160 and the heat dissipation body 170 can be stably coupled to the pipe coupling part 116. Furthermore, the busbar 240 to be described later can be coupled to the upper surface 13 of the housing body part 12 while being in surface contact with the heat dissipation body 170.

In addition, the cooling pipe 160 and the heat dissipation body 170 can be protected from external contamination or impact by the pipe coupling part 116. Moreover, the pipe coupling part 116 can perform a function of preventing the heat dissipation body 170 from escaping out of the heat exchange region while at the same time maintaining and fixing an overall shape of the heat dissipation body 170. However, a depth of the pipe coupling groove is not limited to the foregoing depth.

Referring to FIGS. 7 and 8, the busbar 240 of the battery disconnect device 201 according to still another embodiment of the present disclosure can be coupled to the upper surface 13 of the housing body part 12 so as to cover at least a portion of the pipe coupling part 116.

In this embodiment, the busbar 240 can include a pipe contact part 242. The pipe contact part 242 can be provided as a flat-shaped member having a predetermined length in an extension direction of the cooling pipe 160 to cover an opening part of the pipe coupling groove of the pipe coupling part 116 described above. Accordingly, the cooling pipe 160 and heat dissipation body 170 accommodated in the pipe coupling groove can be protected from external contamination or impact.

In this case, in this embodiment, a pipe contact surface 243 can be provided at a lower part of the pipe contact part 242. The pipe contact surface 243 can be defined as a surface that exchanges heat while being in surface contact with an outer periphery of the heat dissipation body 170 surrounding the cooling pipe 160. The pipe contact surface 243 can be provided along an extension direction of the cooling pipe 160, and configured to be contact with the heat dissipation body 170 over as much area as possible.

The busbar 240 of the battery disconnect device 201 according to still another embodiment of the present disclosure can include a contactor connection part 244. In this case, the contactor connection part 244 can be provided as a flat-shaped member connected to a side part of the pipe contact part 242.

In this way, in this embodiment, the busbar 240 can be provided as a simple flat-shaped single member, thereby reducing a unit price of the component and manufacturing cost. In this case, the pipe contact part 242 should be interpreted as referring to a portion of the busbar 240, and the contactor connection part 244 should be interpreted as referring to another portion of the busbar 240.

In this case, in this embodiment, the busbar 240 can be provided in plurality. Furthermore, the plurality of busbars 240 can be arranged in a predetermined manner on the upper surface 13 of the housing body part 12. In the shown embodiment, a plurality of busbars 240 are arranged along a Y-axis direction.

Moreover, the plurality of busbars 240 can have different shapes. The shape of each busbar 240 can be deformed in consideration of the shape of a portion of the housing body part 12 in which the busbar 240 is placed or a relative position with respect to the contactor 20.

Referring again to FIGS. 8 and 9, the cooling pipe 160 can be coupled to the pipe coupling part 116 of the battery disconnect device 201 according to still another embodiment of the present disclosure. The cooling pipe 260 can be provided in a form of a pipe through which a predetermined cooling fluid can flow.

In this case, a type of cooling fluid and a material constituting the cooling pipe 260 can be configured to be the same as those of the cooling pipe and the cooling fluid of the battery disconnect device according to one embodiment of the present disclosure described with reference to FIGS. 1 to 3.

In this embodiment, the cooling pipe 160 is inserted into the pipe coupling groove so as to pass therethrough. In other words, the cooling pipe 160 is arranged to pass through a heat exchange region provided into the pipe coupling groove.

In this case, the cooling pipe 160 can extend in one direction. In this embodiment, the cooling pipe 160 extends along a direction in which the plurality of busbars 240 are arranged. Accordingly, at least a portion of the cooling pipe 160 can be adjacent to any one of the plurality of busbars 240 so as to effectively receive heat generated from the busbar 240.

Referring again to FIG. 3, the cooling pipe 260 of the battery disconnect device 201 according to one embodiment of the present disclosure can have a rectangular shape in a cross-section perpendicular to an extension direction.

Accordingly, a ratio of an outer peripheral area of the cooling pipe 260 to a volume of the cooling pipe 260 increases, and thus the cooling pipe 260 can exchange heat through a wider outer peripheral area.

In this case, a cross-section perpendicular to an extension direction of the cooling pipe 260 can have a length such that a first width W1 in an X-axis direction parallel to the upper surface 13 of the housing body part 12 is larger than a second width W2 in a Z-axis direction perpendicular to the first width W1.

Through this, the busbar 240 and cooling pipe 160 of the battery disconnect device 201 according to this embodiment can exchange heat while facing each other over a wider area, thereby more effectively dissipating heat generated from the busbar 240.

Referring to FIGS. 7 to 9, the cooling pipe 160 of the battery disconnect device 201 according to one embodiment of the present disclosure can be configured such that an outer periphery thereof is surrounded by the heat dissipation body 170. In this case, the heat dissipation body 170 can be configured to seal a heat exchange region provided in the pipe coupling groove.

The cooling pipe 160 and the heat dissipation body 170 can be respectively configured to be the same as those of the battery disconnect device according to one embodiment of the present disclosure described with reference to FIGS. 1 to 3.

Although one embodiment of the present disclosure has been described above, the concept of the present disclosure is not limited to the embodiment presented in this specification, and those skilled in the art who understand the concept of the present disclosure will be able to easily propose other embodiments by adding, changing, deleting, or supplementing elements within the scope of the same concept, but this will also be considered to fall within the concept of the present disclosure.
1 101 201: Battery disconnect device 10 110: Housing
20: Contactor 30: Fuse
40 140 240: Busbar 50: Coupling member
60 160: Cooling pipe 70 170: Heat dissipation body

## Claims

1. A battery disconnect device comprising:
a housing comprising a housing body part in a box shape and a pipe coupling part provided on one surface of the housing body part;
a plurality of contactors arranged inside the housing body part and electrically connected to an external power source and external loads, respectively;
a busbar comprising a pipe contact part covering at least a portion of the pipe coupling part and a contact connection part connected to the pipe contact part and electrically connected to at least one of the plurality of contactors;
a cooling pipe arranged to pass between the pipe coupling part and the pipe contact part, and through which a cooling fluid for receiving heat generated from the busbar and dissipating it to the outside can flow therein; and
a heat dissipation body made of a material having a predetermined elasticity or a material having a predetermined fluidity that can be deformed to fit a shape of a space accommodated at least during installation so as to surround an outer periphery of the cooling pipe.

2. The battery disconnect device of claim 1, wherein the heat dissipation body is interposed between the pipe contact part and the pipe coupling part and configured to seal at least one region therebetween.

3. The battery disconnect device of claim 1, wherein the pipe coupling part comprises a coupling groove provided on the one surface of the housing body part to accommodate one side part of the cooling pipe.

4. The battery disconnect device of claim 3, wherein the coupling groove has a shape corresponding to an outer periphery of the cooling pipe.

5. The battery disconnect device of claim 3, wherein the pipe contact part comprises a contact groove that accommodates the other side part of the cooling pipe.

6. The battery disconnect device of claim 5, wherein the contact groove has a shape corresponding to an outer periphery of the cooling pipe.

7. The battery disconnect device of claim 1, wherein the pipe contact part comprises a pipe contact surface surrounding one side part of the cooling pipe.

8. The battery disconnect device of claim 7, wherein the pipe contact surface is bent in an outer direction of the housing body to correspond to a shape of an outer periphery of one side part of the cooling pipe.

9. The battery disconnect device of claim 7, wherein the pipe coupling part comprises a pipe coupling surface surrounding the other side part of the cooling pipe.

10. The battery disconnect device of claim 9, wherein the pipe coupling surface is bent toward the housing body to correspond to a shape of an outer periphery of the other side part of the cooling pipe.

11. The battery disconnect device of claim 1, wherein the pipe contact part has a plate shape that is convexly curved in an outer direction of the housing body part.

12. The battery disconnect device of claim 1, wherein the pipe contact part is arranged to extend parallel to the cooling pipe, and
wherein the contactor connection part is connected to a side part of the pipe contact part in an extension direction.

13. The battery disconnect device of claim 12, wherein the contactor connection part has a flat shape parallel to the one surface of the housing body part.

14. The battery disconnect device of claim 1, wherein the busbar comprises:
an inner busbar comprising an inner pipe contact part coupled to the pipe coupling part and an inner contactor connection part connected to the inner pipe contact part; and
an outer busbar comprising an outer pipe contact part covering at least a portion of the inner pipe contact part and an outer contactor connection part connected to the outer pipe contact part to be electrically connected to the inner contactor connection part, and
wherein the cooling pipe is arranged to pass between the inner pipe contact part and the outer pipe contact part.

15. The battery disconnect device of claim 14, wherein the inner contactor connection part and the outer contactor connection part are in contact with each other.

16. The battery disconnect device of claim 14, wherein the inner busbar and the outer busbar have a symmetrical shape with respect to the cooling pipe.

17. The battery disconnect device of claim 1, wherein the cooling pipe has a rectangular shape in a cross-section perpendicular to an extension direction.

18. The battery disconnect device of claim 17, wherein the busbar has a flat shape parallel to the one surface of the housing body part.

19. The battery disconnect device of claim 17, wherein the rectangular shape has a first width parallel to the one surface of the housing body part that is larger than a second width perpendicular to the first width.

20. The battery disconnect device of claim 1, wherein the busbar is provided in plurality, and
wherein the plurality of busbars are arranged in a row along an extension direction of the cooling pipe.

21. The battery disconnect device of claim 1, wherein the heat dissipation body is made of a thermal conductive pad, a thermal conductive gel or a thermal conductive rubber.

22. The battery disconnect device of claim 21, wherein the thermal conductive pad, thermal conductive gel or thermal conductive rubber has a thermal conductivity above 1 W/mK.

23. The battery disconnect device of claim 1, wherein the external power source is a battery provided in an electric vehicle.

24. The battery disconnect device of claim 1, wherein the heat dissipation body comprises a material having an insulating property so as to secure predetermined insulating performance.
